# EUROPÄISCHE PATENTSCHRIFT

(11) **EP 0 482 002 B1**
(45) Veröffentlichungstag und Bekanntmachung des Hinweises auf die Patenterteilung: **01.09.1993**
(21) Anmeldenummer: 90906936.1
(22) Anmeldetag: 27.04.1990
(51) Int. Cl.: H02M 7/757

(54) **VERFAHREN UND VORRICHTUNG ZUR ABLÖSENDEN REGELUNG MEHRERER REGELGRÖSSEN EINES STROMRICHTERS**
PROCESS AND DEVICE FOR TAKING OVER THE REGULATION OF SEVERAL REGULATING PARAMETERS OF A POWER CONVERTER
PROCEDE ET DISPOSITIF POUR RELAYER LA REGULATION DE PLUSIEURS GRANDEURS DE REGLAGE D'UN CONVERTISSEUR

(30) Priorität: 11.07.1989 WO PCT/DE89/00459
(43) Veröffentlichungstag der Anmeldung: 29.04.1992
(73) Patentinhaber: SIEMENS AKTIENGESELLSCHAFT, 80333 München (DE)
(72) Erfinder: KNITTLER, Dietmar, W-8525 Uttenreuth (DE)
(86) Internationale Anmeldenummer: EP9000687
(87) Internationale Veröffentlichungsnummer: WO9101061

(56) Entgegenhaltungen:
- EP-A- 186 849
- EP-A- 197 352
- IEEE TRANSACTIONS ON INDUSTRIAL ELECTRONICS, Vol. 33, No. 3, 31 August 1986, N.Y., U.S., pp. 254-261

## Beschreibung

Verfahren und Vorrichtung zur ablösenden Regelung mehrerer Regelgrößen eines Stromrichters

Die Erfindung betrifft ein Verfahren zu einer auf den Steuerwinkel eines Stromrichters arbeitenden ablösenden Regelung mehrerer Regelgrößen sowie eine Vorrichtung hierzu.

Beim Betrieb eines Stromrichters kann z.B. die Aufrechterhaltung eines bestimmten Stromes eine Stromregelung mit Regler-Parametern (z.B. der Nachstellzeit TN und dem Proportionalanteil KP eines PI-Reglers) erforderlich sein, die an die Anlage angepaßt sind. Häufig müssen auch nach Nebenbedingungen eingehalten werden, z.B. darf im Wechselrichterbetrieb ein vorgegebener Löschwinkel nicht unterschritten werden, um ein Wechselrichterkippen zu vermeiden, und/oder bestimmte Grenzwerte für die Ausgangsspannung müssen eingehalten werden. Der Stromrichter selbst besitzt aber als Stellgröße praktisch nur den Steuerwinkel, aus dem die Zündimpulse seiner Stromrichterventile abgeleitet werden. Daher muß zur Einhaltung der Nebenbedingungen unter Umständen von der Stromregelung auf eine entsprechende Regelung einer anderen Zustandsgröße übergegangen werden, wobei die Regelungen die-ser anderen Zustandsgrößen dann jeweils eigene Reglerkonstanten er fordern.

Will man also auf die verschiedenen Ereignisse beim Betrieb des Stromrichters reagieren, so ist es in der Analogtechnik üblich, parallele Regler aufzubauen und über eine entsprechende Auswahl jeweils nur auf einen Reglerausgang zuzugreifen, der dann die Steuergröße für den Steuerwinkel des Stromrichters vorgibt. Die Regelkreise der nicht im Eingriff befindlichen Regler sind dadurch nicht geschlossen, so daß ihre Ausgangssignale bis an die Grenze des Aussteuerbereiches gehen würden und bei Aktivierung der Regler eine unverhältnismäßig lange Anregelzeit vergehen würde, bis die entsprechende Regelgröße optimal regelbar ist. Daher müssen die Ausgangssignale der Regler ungefähr dem Steuerwinkel des Stromrichters nachgeführt werden, um im Bedarfsfall sofort richtig eingreifen zu können.

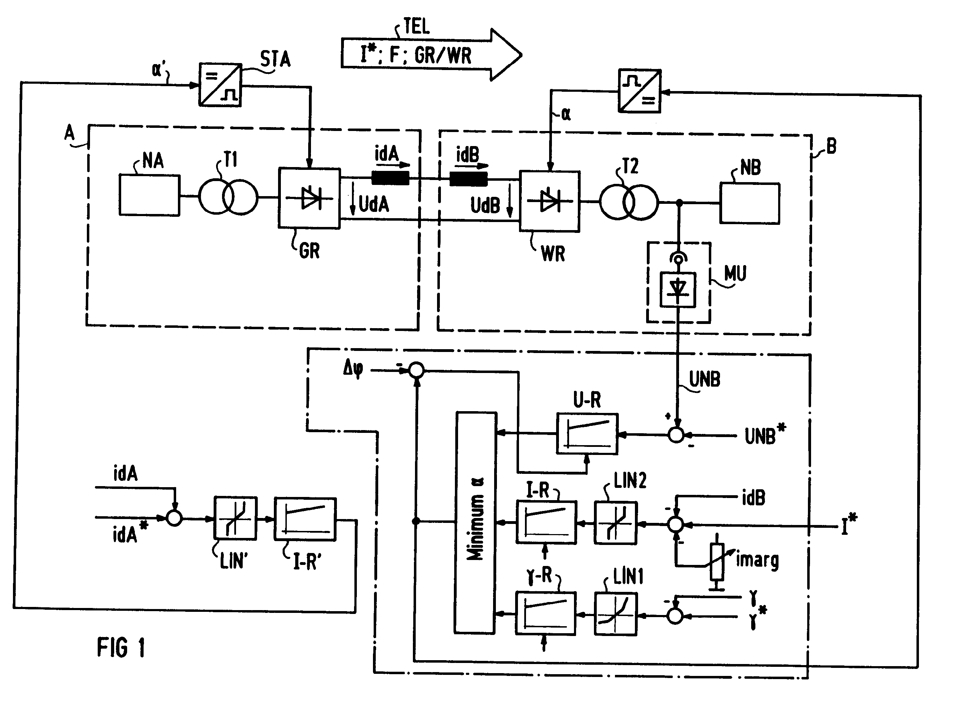

Bevorzugtes Anwendungsgebiet ist die Steuerung einer Hochspannungs-Gleichstromübertragung zwischen zwei jeweils an ein Netz NA bzw. NB angeschlossenen Stationen A und B, wie sie in Fig. 1 dargestellt ist und auch aus der europäischen Patentanmeldung EP-0 197 352 bekannt ist.

Dabei ist von einem Betriebszustand ausgegangen, bei dem der Stromrichter der Station A als Gleichrichter arbeitet und sein Steuerwinkel α' über einen Steuersatz STA die Zündimpulse des Stromrichters GR vorgibt. Dadurch wird am Gleichrichter-Ausgang eine Gleichspannung UdA und an einer Gleichstromdrossel ein Gleichstrom idA erzeugt, die durch entsprechende Sollwerte (z.B. idA*) vorgegeben sind. Das Steuersignal für den Steuerwinkel α' wird also bei diesem Betriebszustand von einem Stromregler I-R' geliefert, dem über ein linearisierendes Glied LIN' die Regelabweichung idA*-idA zugeführt ist.

In der Station B arbeitet der Stromrichter WR als Wechselrichter, der den über eine Gleichstromdrossel eingespeisten Gleichstrom idB und die entsprechende Gleichspannung UdB über einen Transformator T2 in das Wechselstromnetz NB einspeist. Mit TEL ist eine Übertragungsleitung angedeutet, über die z.B. Informationen über den Sollwert I* des zwischen beiden Stationen ausgetauschten Gleichstromes, den Zustand eines Freigabesignales F zum Einschalten oder Ausschalten der ganzen Anlage sowie über ein Signal GR/WR für den Gleichrichterbetrieb bzw. Wechselrichterbetrieb der beiden Stationen ausgetauscht werden.

Im vorliegenden Betriebszustand, bei dem WR als Wechselrichter betrieben wird, sind für den Steuerwinkel α, der definitionsgemäß zwischen 0° und 180° liegt, nur Werte α >90° vorgesehen. Um das Wechselrichterkippen zu vermeiden, muß der Löschwinkel γ kleiner als die Wechselrichtertrittgrenze, z.B. 150°, sein. Da über den Löschwinkel auch die Blindleistung geregelt werden kann, ist ein Löschwinkelregler γ-R vorgesehen, der den Steuerwinkel α in Abhängigkeit von einem betriebsmäßig vorgegebenen Sollwert γ* bzw. der entsprechenden Regelabweichung γ* -γ verstellt.

Sollte aufgrund vorübergehender Störungen der Istwert idB des eingespeisten Gleichstroms um einen vorgegebenen Marginalwert imag unter dem Sollwert I* liegen, so soll die Löschwinkelregelung von einer Stromregelung abgelöst werden. Sollte aber die Spannung UNB des Netzes NB über einen vorgegebenen Grenzwert UNB* ansteigen, so soll durch eine Verringerung des Steuerwinkels die Blindlast der Übertragungsstrecke erhöht werden, also auf eine Spannungsregelung übergegangen werden.

In FIG 1 ist eine Meßeinrichtung MU zur Erfassung der Spannung UNB dargestellt, die auf einen Spannungsregler U-R arbeitet. Die entsprechenden Meßglieder für die Istwerte von idB und γ sind nicht dargestellt, jedoch ist mit LIN1 und LIN2 jeweils ein Linearisierungsglied gezeigt, mit dem ein linearer Zusammenhang zwischen den Regelabweichungen γ* -γ des γ-Reglers bzw. (I*-imarg-idB) des entsprechenden Stromreglers I-R und der jeweiligen Ausgangsgröße dieser Regler erreicht wird.

Ein Auswahlglied "Minimum α" wählt von den Ausgangssignalen der drei Regler γ-R, I-R und U-R das zu den kleinsten Steuerwinkel α gehörende Signal aus. Der Steuerwinkel wird dadurch also auf den Wert gesteuert, der am nächsten an 90° liegt. Die Regler selbst sind so geschaltet, daß sie bei offenem Regelkreis einen Steuerwinkel an der Wechselrichter-Trittgrenze liefern. Soll aber rasch von der γ-Regelung auf eine U-Regelung oder I-Regelung übergegangen werden, so müssen die Regler, die jeweils einen integralen Anteil aufweisen, nachgeführt werden, damit ihre Ausgangssignale nicht wesentlich vom Ausgangssignal des im Eingriff befindlichen γ-Reglers abweichen. Dies wird dadurch erreicht, daß die Regler Eingänge für Grenzwerte aufweisen und die Reglerausgänge jeweils auf diesen Grenzwert begrenzt werden. Der Grenzwert wird dabei durch eine geringfügige Verschiebung des Steuerwinkels α um einen vorgegebenen Differenzwinkel Δφ vorgegeben.

Durch diese Nachführung der Reglerbegrenzungen ist sichergestellt, daß bei vorübergehenden Störungen der Stromregler oder der Spannungsregler rasch in Eingriff kommen kann.

Eine derartige Anlage benötigt also für jede in Frage kommende Regelgröße einen eigenen Regler, dessen Reglerkonstanten an die Anlage angepaßt sind und dessen Ausgangssignal geeignet nachgeführt werden muß. Der dafür erforderliche Aufwand erhöht sich entsprechend, wenn in das jeweilige Regelkonzept noch weitere Regelgrößen aufgenommen werden sollen.

Digitale Regelungen können an sich Regelaufgaben sehr präzise ausführen, jedoch wirkt die zur Durchführung der Regelaufgabe erforderliche Rechenzeit zwischen den Abtastungen der Istwerte und der Errechnung der Steuersignale als eine Totzeit, die bei der Rechengeschwindigkeit verfügbarer Rechner häufig nicht tolerierbar ist.

Der Erfindung liegt die Aufgabe zugrunde, einen einfacheren Aufbau einer derartigen ablösenden Regelung zu schaffen, der insbesondere mittels digitaler Rechner und deren begrenzten Rechengeschwindigkeiten realisiert werden kann. Die zur Lösung dieser Aufgabe gemäß der Erfindung vorgesehenen Merkmale sind in den Ansprüchen 1 und 5 angegeben. Vorteilhafte Weiterbildungen der Erfindung sind in den Unteransprüchen gekennzeichnet. Anhand von einer weiteren Figur und eines Ausführungsbeispieles wird die Erfindung näher erläutert.

Dabei ist davon ausgegangen, daß als Regelgrößen die Betriebsgrößen γ, idB, UdB und UNB berücksichtigt werden sollen, deren Istwerte über entsprechende Analog/Digital-Wandler A/D parallel abgetastet werden. Die entsprechenden Regelabweichungen von den Sollwerten γ*, i* (bzw. I*-imarg), UdB*, UnB* können z.B. seriell ausgelesen werden. Dabei ist ein zusätzlicher Sollwert Ustart vorgesehen, um beim Einschalten (oder ggf. auch nach einer vorübergehenden Stromlosigkeit der Strecke) durch Vorgabe eines hochlaufenden Spannungssollwertes die Gleichspannung wieder aufbauen zu können.

Die Rechenzeit eines Rechengliedes PI, das zur Realisierung eines propartional/integralen Reglers zur Verfügung steht und mit einem entsprechenden Regelalgorithmus programmiert werden muß, ist nicht wesentlich kürzer als die maximal zulässige Totzeit der gesamten Regelung. Daher wäre an sich für jeden dieser Regelkreise ein eigenes Rechenglied erforderlich, wobei diese Rechenglieder parallel arbeiten müßten. Zur Vereinfachung des Hardware-Aufwandes ist jedoch eine sequenzielle Durchführung der Regelalgorithmen angestrebt.

Die Erfindung sieht nun vor, mittels eines Auswahlgliedes von den eingelesenen Regelabweichungen der Regelgrößen diejenige Regelgröße auszuwählen, deren Abweichung im momentanen Betriebszustand kritisch ist und ausgeregelt werden soll. Dies geschieht durch ein entsprechendes Maximalwert-Auswahlglied MAX (bzw. bei entsprechender Auslegung der Regler ein Minimalwert-Auswahlglied), das also den Maximalwert der erfaßten Regeldifferenzen auswählt und die zur ausgewählten Regeldifferenz zugehörige Regelgröße identifiziert. In dem betrachteten Normalzustand ist das Eingangssignal X1 des γ-Reglers γ-R in der Station B größer als die Eingangssignale x2, ... x5, die aus den anderen Regelabweichungen gebildet sind.

Soll zwischen dem Gleichrichterbetrieb und dem Wechselrichterbetrieb in den beiden Stationen ein Rollentausch vorgenommen werden, so kann dies über das Signal GR/WR mittels eines Umschalters SW geschehen. Dabei wird der Umschalter von der dem Wechselrichterbetrieb zugehörigen Stellung WR auf die Stellung GR geschaltet, bei der dem Eingang xl des Maximalwert-Auswahlgliedes ein Wert vorgegeben wird, der z.B. 200% des Sollwertes entspricht und damit so stark von dem normalen Wertebereich der Eingänge x1, ... x5 abweicht, daß die entsprechende Regelgröße γ* bzw. deren Regelabweichung γ* - γ mit Sicherheit nicht ausgewählt und auf den Ausgang des Auswahlgliedes durchgeschaltet wird.

An diesem Ausgang liegt also von allen eingegebenen Eingangsgrößen xi der Maximalwert MAX(xi), während ein zugehöriges Identifizierungssignal i die zugehörige Regelgröße (für MAX (xi) = x1 also i = 1) angibt.

Das Auswahlsignal i steuert Mittel an, die aus vorgegebenen Reglerkonstanten die zu der ausgewählten Regelgröße gehörenden Reglerkonstanten auswählt. Dies geschieht dadurch, daß z.B. mit i = 1 jeweils über die Eingänge i = 1 der beiden Multiplexer MUX' und MUX'' die Proportionalkonstante KPγ und die Nachstellzeit TN-γ aus einem Festwertspeicher MM ausgelesen und auf die Multiplexer-Ausgänge gelegt werden. Die Festwertspeicher enthalten für jeden Regelkreis der Regelgrößen die entsprechenden Reglerkonstanten eines Proportional/Integral-Reglers.

Der Regler selbst ist nur in seiner Grundstruktur festgelegt. Bevorzugt ist der Regler in der Software eines Mikrocomputers als entsprechender Regelalgorithmus programmiert und seine Reglerkonstanten sowie obere und untere Grenzwerte LIMh und LIMl werden ihm als Eingangsgrößen jeweils eingegeben. Der Regler selbst ist somit flexibel und nicht auf einen bestiemmten Regelkreis festgelegt. Am Ausgang des Reglers liegt die Steuergröße für den Steuerwinkel α an.

Bei diesem Regelkonzept wird also nur ein Regler benötigt, während durch Belegung weiterer Eingänge am Auswahlglied MAX und den beiden Multiplexern jederzeit weitere Regelgrößen in das Regelkonzept einbezogen werden können. Der Regler selbst ist stets im Eingriff, so daß eine Nachführung seines Ausgangssignals nicht erforderlich ist.

Cer Stromrichter erfordert zur sicheren Kommutierung des Stromes zwischen seinen Ventilzweigen, daß der Steuerwinkel die Wechselrichter-Trittgrenze (z.B. 150°) nicht überschreitet und einen gewissen Minimalwinkel (z.B. 5°) nicht unterschreitet. Dies kann durch die beiden Grenzwerte LIMh, LIMl sichergestellt werden, wobei zusätzlich auch berücksichtigt werden kann, daß z.B. die als Wechselrichter betriebene Station nicht in den Gleichrichterbetrieb übergehen soll, also γ z.B. den Grenzwert LIMl = 90° nicht unterschreiten soll. Die Grenzwerte können aber auch auf einfache Weise verwendet werden, um weitere Nebenbedingungen einzuhalten. Wird z.B. nur ein geringer Gleichstrom idB aus der Übertragungsstrecke entnommen und in das Netz NB eingespeist, so wird für die Kommutierung des Stromes nur ein geringer Überlappungswinkel zwischen der Zündung des nächsten Ventiles und dem Erlöschen des vorangegangenen Ventiles benötigt. Der Steuerwinkel α liegt daher nahe an dem durch die Wechselrichter-Trittgrenze vorgegebenen Soll-Löschwinkel γ*, wodurch die Spannung UNB ansteigt. Ist ein derartiger Anstieg der Netzspannung unerwünscht, so kann durch Verschiebung des Steuerwinkels in Richtung auf 90° erreicht werden, daß die Übertragungsstrecke im wesentlichen als Blindlast für das Netz NB wirkt und die Netzspannung auf niedrigeren Werten stabilisiert. Dies entspricht dem Übergang auf eine Steuerung, d.h. die Regelung der Regelgrößen wird außer Eingriff gebracht und der Steuerwinkel wird in funktionaler Abhängigkeit vor einem geeignet gewählten Sollwert oder Istwert vorgegeben.

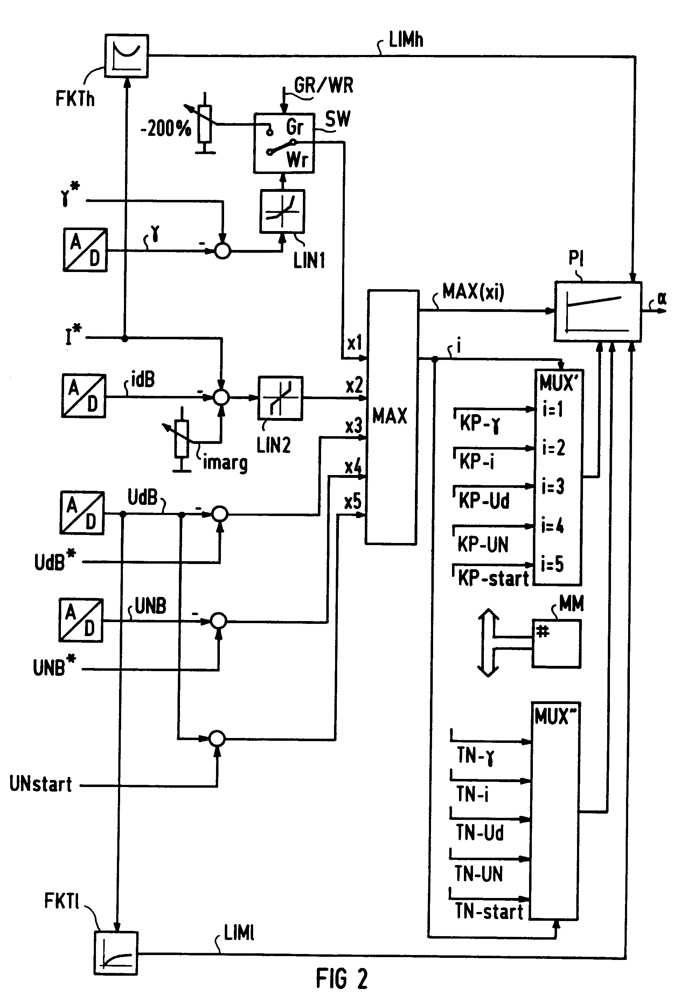

Ein derartiger Übergang ist in Fig. 2 durch die beiden Funktionsgeber FKTh und FKTl dargestellt, die von entsprechenden Sollwerten oder Istwerten gespeist sind und den Regelkreis der ausgewählten Regelgröße bei Betriebszuständen außer Eingriff bringen, bei denen der Steuerwinkel die zur Einhaltung der erwähnten Nebenbedingungen erforderlichen Werte überschreiten bzw. unterschreiten würde. Dadurch findet auch eine selbsttätige Ablösung der Regelung durch die Steuerung und umgekehrt statt.

Bei dieser digitalen Regelung wird also in regelmäßigen Abständen, deren Dauer durch die erforderliche Ansprechdynamik der Regelung vorgegeben ist, jeweils der Istwert aller Regelgrößen abgetastet, was vorzugsweise über parallel arbeitende Analog/Digital-Umsetzer geschieht. Zu Beginn jedes Zeitintervalls werden die Regeldifferenzen der Regelgrößen (vorzugsweise seriell) eingelesen. Die Auswahl der ausgewählten Regeldifferenz und die Bestimmung der Reglerparameter der zugehörigen Regelgröße kann über Hardware-Glieder (MAX, MUX', MUX'') geschehen; diese Glieder können aber ahne wesentliche Belastung des Rechners auch in dessen Saftware realisiert sein. Nach der Auswahl der Regeldifferenz und der Reglerparameter wird in der vorprogrammierten Reglerstruktur PI des Rechners der konkrete Regleralgorithmus mit den zum vorliegenden Betriebszustand gehörenden Reglerparametern festgelegt und das geregelte Steuersignal für den Steuerwinkel α errechnet. Über die Eingabe von SteuerwinkelGrenzwerten, die in funktionaler Abhängigkeit von Istwerten oder Sollwerten ausgewählter Betriebsgrößen vorgegeben werden, wird die Einhaltung vorgegebener Nebenbedingungen überwacht.

Die gleiche Reglerstruktur ist in beiden Stationen der Hochspannungs-Gleichstromübertragung vorgesehen. Bestimmte Regelgrößen, die bei dem vorgegebenen Betrieb als Wechselrichter oder Gleichrichter nicht berücksichtigt werden sollen, können auf einfache Weise übergangen werden, indem die Regeldifferenz dieser Regelgrößen durch unplausible Werte ersetzt werden, die daher bei der Auswahl der in Eingriff zu bringenden Regeldifferenz ausgeschieden werden.

Dieses Reglerkonzept ist aber nicht nur für Hochspannungs-Gleichstrom-Übertragungsanlagen, sondern auch auf andere Steuerung und Regelungen von Stromrichtergeräten anwendbar.

## Patentansprüche

1. Verfahren zu einer auf den Steuerwinkel (α) eines Stromrichters (WR) arbeitenden ablösenden Regelung mehrerer Regelgrößen (γ,id,Ud,UN), mit folgenden Merkmalen:
a) Es werden die Regeldifferenzen (x1,...,x5) aller Regelgrößen (γ,id,Ud,uN) erfaßt,
b) nach einem vorgegebenen Kriterium wird die in Eingriff zu bringende Regelgröße (γ bzw. id bzw. Ud bzw. UN) identifiziert und unter den erfaßten Regeldifferenzen (x1,...,x5) deren Regeldifferenz (xi) ausgewählt,
c) die ausgewählte Regeldifferenz (xi) wird auf den Eingang eines Reglergliedes (PI) gegeben,
d) aus vorgegebenen Reglerkonstanten (KP-i,TN-i), die jeweils einer Regelgröße (γ,id,Ud,UN) zugeordnet sind, werden die zur identifizierten Regelgröße gehörenden Reglerkonstanten (KP-i,TN-i) ausgewählt und dem Regelglied (PI) eingegeben, und
e) das Regelglied (PI) bildet aus der ausgewählten Regeldifferenz (xi) und den ausgewählten Reglerkonstanten (KP-i,TN-i) eine Steuergröße für den Steuerwinkel (α) des Stromrichters (WR),
f) das Regelglied (PI) wird stets im Eingriff gehalten und
g) die erfaßte Regeldifferenz (xi) einer-Regelgröße (γ bzw. bzw. Ud bzw. UN), die bei der ablösenden Regelung nicht berücksichtigt werden soll, wird durch nichtplausible Werte ersetzt.

2. Verfahren nach Anspruch 1, **dadurch gekennzeichnet**, daß zum Übergang auf eine Steuerung dem Regelglied (PI) ein Grenzwert (LIMh,LIMl) eingegeben wird, der nach einer vorgegebenen Kennlinie von einer Betriebsgröße (γ, UdB) des Stromrichters (WR) abhängt, und daß die Steuergröße für den Steuerwinkel (α) auf diesen Grenzwert (LIMh,LIMl) begrenzt wird.

3. Verfahren nach Anspruch 1, **dadurch gekennzeichnet,**
- daß im Regelglied (PI) durch Programmierung eines Rechenteils eine Reglerstruktur mit unbestimmten Reglerkonstanten vorgegeben wird und für jede unbestimmte Reglerkonstante eine Vielzahl von jeweils einer Regelgröße zugeordneten Parameterwerten festgelegt wird,
- daß die Istwerte der Regelgrößen (γ,id,UD,UN) periodisch abgetastet und Digitalwerte für die Differenz (x1,...,x5) der abgetasteten Istwerte von vorgegebenen Sollwerten (γ*, id*,Ud*,UN') dieser Regelgröße zu Beginn jeder Periode gebildet werden,
- daß aus den Digitalwerten der Minimalwert oder Maximalwert (MAX(xi)) ausgewählt und ein Identifizierungssignal (i) zur Identifizierung der zum ausgewählten Digitalwert (xi) gehörenden Regelgröße gebildet wird,
- daß mittels des Identifizierungssignals (i) im Rechenteil die unbestimmten Reglerkonstanten (KP-γ,KP-id,KP-Ud,KP-UN, TN-γ,TN-id,TN-Ud,TN-UN) auf die ausgewählten Reglerparameter (KP-i, TN-i) gesetzt werden, und
- daß das Rechenteil den Steuerwinkel (α) des Stromrichters (WR) derart steuert, daß der ausgewählte Digitalwert (xi) ausgeregelt wird.

4. Vorrichtung zur ablösenden Regelung mehrerer Regelgrößen (γ,id,Ud,UN) einer Stromrichteranlage (GR,WR), mit
a) Einrichtungen zur Abtastung der Regelabweichungen aller Regelgrößer (γ,id,Ud,UN),
b) einem Speicher (MM), in dem für jede Regelgröße (γ,id,Ud, UN) ein Satz zugehörender Reglerkonstanten (KP-γ,TN-γ,KP-id, TN-id,KP-Ud,TN-Ud,KP-UN,TN-UN) gespeichert ist, und
c) einer Regeleinrichtung (MAX,MUX',MUX'',PI ,FKTh,FKTl), die mit ihren Eingängen an die Abtasteinrichtung und den Speicher (MM) angeschlossen ist, an ihrem Ausgang eine Steuergröße für den Steuerwinkel (α) bereitstellt und nach folgendem Algorithmus arbeitet:
Aus den abgetasteten Regelabweichungen (x1,...,x5) wird der Minimalwert oder der Maximalwert (MAX(xi)) ausgewählt und ein Signal zur Identifizierung (i) der Regelgröße gebildet, deren Regelabweichung (xi) ausgewählt ist,
aus dem Speicher (MM) werden die zur identifizierten Regelgröße (xi) gehörenden Reglerkonstanten (KP-i,TN-i) ausgelesen,
in einen Regelteil (PI), dem eine Reglerstruktur mit unbestimmten Reglerkonstanten (KP-i,TN-i) vorgegeben ist, werden die ausgewählten Reglerkonstanten als Werte der unbestimmten Reglerkonstanten eingegeben und die Steuergröße in Abhängigkeit von dem ausgewählten Wert (xi) der abgetasteten Regeldifferenzen (x1,...,x5) gebildet.

5. Vorrichtung nach Anspruch 4, **dadurch** **ge****kennzeichnet**, daß die Abtasteinrichtungen parallel arbeitende Analog/Digital-Wandler enthalten, die in periodischen Abständen jeweils zu Beginn einer Periode seriell auslesbare Digitalwerte für die Differenz (x1,..., x5) der abgetasteten Istwerte von vorgegebenen Sollwerten der Regelgrößen (γ,id,Ud,UN) bereitstellen, und daß die Regeleinrichtung (MAX,MUX',MUX'',PI,FKTh,FKTl) einen digitalen Rechner enthält, dessen Reglerstruktur mit den unbestimmten Regelparametern vorprogrammiert ist.

6. Vorrichtung nach Anspruch 5, **dadurch** **gekennzeichnet**, daß der Regelteil (PI) Mittel zur Begrenzung des Steuerwinkels auf einen eingegebenen Grenzwert (LIMh,LIMl) aufweist und die Regeleinrichtung (MAX,MUX',MUX'', PI,FKTh,FKTl) Mittel enthält, die den Grenzwert (LIMh,LIMl) nach einer vorgegebenen Kennlinie in Abhängigkeit von einem Sollwert (γ*) oder einem Istwert (UdB) der Regelgrößen (Ud) bilden.

7. Anwendung des Verfahrens nach Anspruch 1 für die Steuerung der Stromrichter (GR,WR) in einer Hochspannungs-Gleichstrom-Übertragungsanlage.

8. Anwendung der Vorrichtung nach Anspruch 4 in Regel- und Steuereinrichtungen der stromrichter (GR,WR) einer Hochspannungs-Gleichstrom-Übertragungsanlage.

## Claims

1. A method for override control of several controlled variables (γ,id,Ud,UN), operating on the delay angle (α) of a power converter (WR), with the following features:
a) The control differences (x1,...,x5) of all controlled variables (γ,id,Ud,UN) are obtained;
b) according to a given criterion, the controlled variable (γ or id or Ud or UN) to be brought into operation is identified and its control difference (xi) is selected from among the acquired control differences (x1,...,x5);
c) the selected control difference (xi) is transmitted to the input of a controller element (PI);
d) the controller constants (KP-i,TN-i) belonging to the identified controlled variable are selected from specified controller constants (KP-i,TN-i), which are assigned in each case to a controlled variable (γ,id,Ud,UN), and input into the controlling element (PI); and
e) the controlling element (PI) forms a control variable (xi) for the delay angle (α) of the power converter (WR) from the selected control difference and the selected controller constants (KP-i,TN-i),
f) the controlling element (PI) is always kept in operation and
g) the acquired control difference (xi) of a controlled variable (γ or Ud or Un), which is not supposed to be considered during the override control, is replaced by implausible values.

2. A method according to claim 1, characterised in that to make the transition to openloop control, a limiting value (LIMh,LIMl) is input into the controlling element (PI), said limiting value depending on a specified characteristic of a performance quantity (γ,UdB) of the power converter (WR), and that the control variable for the delay angle (α) is limited to this limiting value (LIMh,LIMl).

3. A method according to claim 1, characterised in that
- a controller structure with indefinite controller constants is specified in the controlling element (PI) by programming an arithmetic unit, and a plurality of parameter values, which are assigned in each case to a controlled variable, is established for each indefinite controller constant;
- that the actual values of the controlled variables (γ,id,UD,UN) are periodically sampled, and digital values are formed at the beginning of each period corresponding to the difference (x1,...,x5) between the sampled actual values and the specified desired values (γ*,id*,UN') of this controlled variable;
- that the minimum value or the maximum value (MAX(xi)) is selected from the digital values, and an identification signal (i) is formed to identify the controlled variable belonging to the selected digital value (xi);
- that by means of the identification signal (i), the indefinite controller constants (KP-γ,KP-id,KP-Ud,kP-UN,TN-γ,TN-id,TN-Ud,TN-UN) are set to the selected controller parameters (KP-i,TN-i) in the arithmetic unit and
- that the arithmetic unit controls the delay angle (α) of the power converter (WR) in such a way that the selected digital value (xi) is corrected.

4. A device for an override control of several controlled variables (γ,id,Ud,UN) of a power converter installation (GR,WR), with
a) devices for sampling the system deviations of all controlled variables (γ,id,Ud,UN);
b) a memory (MM), in which a set of corresponding controller constants (KP-γ,TN-γ,KP-id,TN-id,KP-Ud,TN-Ud,KP-UN,TN-UN) is stored for each controlled variable (γ, id,Ud,UN) and
c) a controlling device (MAX,MUX',MUX'',PI, FKTh,FKTl), which is connected with its inputs to the sampling device and to the memory (MM), which at its output makes available a control variable for the delay angle (α) and which works according to the following algorithm:
The minimum value or the maximum value (MAX(xi)) is selected from the sampled system deviations (x1,...x5), and a signal for identifying (i) the controlled variable is formed, whose system deviation (xi) is selected,
the controller constants (KP-i,TN-i) belonging to the identified controlled variable (xi) are read out from the memory (MM),
the selected controller constants are input as values of the indefinite controller constants into a controlling unit (PI), which has a controller structure with indefinite controller constants (KP-i,TN-i), and the control variable is formed in dependence upon the selected value (xi) of the sampled control differences (x1,...x5).

5. A device according to claim 4, characterised in that the sampling devices contain parallel-working analog-digital converters, which make available in periodic intervals, in each case at the beginning of a period, digital values, which can be read out serially, for the difference (x1,...,x5) between the sampled actual values and predetermined desired values of the controlled variables (γ,id,Ud,UN), and that the controlling device (MAX',MUX',MUX'',PI,FKTh,FKTl) contains a digital computer, whose controller structure is pre-programmed with the indefinite controlling parameters.

6. The device according to claim 5, characterised in that the controlling unit (PI) contains means for limiting the delay angle to an input limiting value (LIMh,LIMl), and the controlling device (MAX,MUX',MUX'',PI,FKTh,FKTl) contains means which form the limiting value (LIMh,LIMl) according to a specified characteristic in dependence upon a desired value (γ*) or an actual value (UdB) of the controlled variables (Ud).

7. An application of the method according to claim 1 for the open-loop control of the power converters (GR,WR) in a high-voltage d.c. transmission system.

8. An application of the method according to claim 4 in controllers and control systems of the power converters (GR,WR) of a high-voltage d.c. transmission system.

## Revendications

1. Procédé pour une régulation en relais, qui agit sur l'angle de commande (α) d'un convertisseur statique (WR), de plusieurs grandeurs de réglage (γ,id,Ud,UN), comportant les caractéristiques suivantes :
a) on détecte les différences de réglage (x1,...,x5) de toutes les grandeurs de réglage (γ,id,Ud,UN),
b) sur la base d'un critère prédéterminé, on identifie la grandeur de réglage (γ ou id ou Ud ou UN) devant être traitée et on choisit sa différence de réglage (xi) parmi les différences de réglage détectées (x1,...,x5),
c) on applique la différence de réglage sélectionnée (xi) à l'entrée d'un circuit de réglage (PI),
d) à partir de constantes prédéterminées de réglage (KP-i, TN-i), qui sont associées respectivement à une grandeur de réglage (γ, id, Ud, UN), on sélectionne les constantes de réglage (KP-i, TN-i), associées à la grandeur de réglage identifiée, et on les envoie au circuit de réglage (PI),
e) le circuit de réglage (PI) forme, à partir de la différence de réglage sélectionnée (xi) et des constantes de réglage sélectionnées (KP-i, TN-i), une grandeur de commande pour l'angle de commande (α) du convertisseur statique (WR),
f) on maintient en permanence le circuit de réglage (PI) en action, et
g) la différence de réglage détectée (xi) d'une grandeur de réglage (γ ou id ou Ud ou UN), qui ne doit pas être prise en compte lors du réglage à séparation, est remplacée par des valeurs non plausibles.

2. Procédé suivant la revendication 1, caractérisé par le fait que pour le passage à une commande, au circuit de réglage (PI) est envoyée une valeur limite (LIMh, LIMl), qui dépend, conformément à une courbe caractéristique prédéterminée, d'une grandeur de service (γ, UdB) du convertisseur statique (WR), et que la grandeur de commande pour l'angle de commande (α) est limitée à cette valeur limite (LImh, LIMl).

3. Procédé suivant la revendication 1, caractérisé par le fait
- que dans le circuit de réglage (PI), une structure de régulateur est prédéterminée avec des constantes indéterminées, par programmation d'une partie de calcul et que pour chaque constante indéterminée du régulateur on fixe une multiplicité de valeurs de paramètres associés respectivement à une grandeur de réglage,
- que les valeurs réelles des grandeurs de réglage (γ, id, Ud, UN) sont explorées périodiquement et que des valeurs numériques pour la différence (x1,..., x5) entre les valeurs réelles échantillonnées et les valeurs de consigne prédéterminées (γ*, id*, Ud*, UN') de cette grandeur de réglge sont formées au début de chaque période,
- que la valeur minimale ou la valeur maximale (MAX(xi) ) est sélectionnée à partir des valeurs numériques et qu'un signal d'identification (i) est formé pour identifier la grandeur de réglage associée à la valeur numérique sélectionnée (xi ),
- que les constantes indéterminées du régulateur (KP-γ, KP-id, KP-Ud, KP-UN, TN-γ, TN-id, TN-Ud, Tn-UN) sont réglées sur les paramètres de réglage sélectionnés (KP-i, TN-i) au moyen du signal d'identification (i) dans la partie de calcul, et
- que la partie de calcul commande l'angle de commande (α) du convertisseur statique (WR) de manière que la valeur numérique sélectionnée (xi) soit réglée.

4. Dispositif pour la régulation en relais de plusieurs grandeurs de mesure (γ, id, Ud, UN) d'une installation de convertisseur statique (GR,WR), comportant
a) des dispositifs pour échantillonner les écarts de réglage de toutes les grandeurs de réglage (γ, id, Ud, UN),
b) une mémoire (MM), dans laquelle est mémorisée, pour chaque grandeur de réglage (γ, id, Ud, UN), un ensemble de constantes associées du régulateur (KP-γ, TN-γ, KP-id, TN-id, KP-Ud, TN-Ud, KP-UN, TN-UN), et
c) un disposif de réglage (MAX, MUX', MUX'', PI, FKTh, FKTl), dont les entrées sont raccordées au dispositif d'échantillonnage et à la mémoire (MM), délivre à sa sortie une grandeur de commande pour l'angle de commande (α) et travaille selon l'algorithme suivant :
la valeur minimale ou la valeur maximale (MAX(xi)) est sélectionnée à partir des écarts de réglage échantillonnés (x1,...,x5) et un signal est formé pour l'identification (i) de la grandeur de réglage, dont l'écart de réglage (xi) est sélectionné,
les constantes (KP-i, TN-i) du régulateur, qui sont associées à la grandeur de réglage (xi) identifiée, sont lues à partir de la mémoire (MM),
dans une partie de réglage (PI), pour laquelle est fixée une structure de régulateur comportant des constantes de réglage indéterminées (KP-i, TN-i), les constantes sélectionnées du régulateur sont introduites en tant que valeurs de la constante indéterminée du régulateur, et la grandeur de commande est formée en fonction de la valeur sélectionnée (xi) des différences de réglage échantillonnées (x1,...,x5).

5. Dispositif suivant la revendication 4, caractérisé par le fait que les dispositifs d'échantillonnage comportent des convertisseurs analogique/numérique travaillant en parallèle, qui, à des intervalles périodiques, préparent, respectivement au début d'une période, des valeurs numériques lisibles en série pour la différence (x1,...,x5) entre les valeurs réelles échantillonnées et des valeurs de consigne prédéterminées des grandeurs de réglage (γ, id, Ud, UN), et que le dispositif de réglage (MAX, MUX', MUX'', PI, FKTh, FKTl) comporte un calculateur numérique dont la structure de réglage est préprogrammée avec les paramètres de réglage indéterminés.

6. Dispositif suivant la revendication 5, caractérisé par le fait que la partie de réglage (PI) possède des moyens pour limiter l'angle de commande à une valeur limite introduite (LIMh, LIMl), et que le dispositif de réglage (MAX,MUX',MUX'',PI,FKTh,FKTl) comporte des moyens qui forment la valeur limite (LIMh, LIMl) sur la base d'une courbe caractéristique prédéterminée en fonction d'une valeur de consigne (γ*) ou d'une valeur réelle (UdB) de la grandeur de réglage (Ud).

7. Application du procédé suivant la revendication 1 à la commande des convertisseurs statiques (GR,WR) dans une installation véhiculant un courant continu à haute tension.

8. Application du dispositif suivant la revendication 4 à des dispositifs de réglage et de commande des convertisseurs statiques (GR,WR) d'une installation véhiculant un courant continu à haute tension.
